# FASCICULE DE BREVET EUROPEEN

(11) **EP 0 977 412 B1**
(45) Date de publication et mention de la délivrance du brevet: **13.07.2005**
(21) Numéro de dépôt: 99401908.1
(22) Date de dépôt: 27.07.1999
(51) Int. Cl.: H04L 29/12

(54) **Procédé d'attribution d'adresses informatiques entre unités d'un système de conduite d'installation industrielle**
Verfahren zur Adresszuweisung zwischen Einheiten eines Steuerungssystems einer industriellen Anlage
Method for address allocation among units of an industrial installation control system

(30) Priorité: 28.07.1998 FR 9809657
(43) Date de publication de la demande: 02.02.2000
(73) Titulaire: Alstom Entreprise SA, 92300 Levallois Perret (FR)
(72) Inventeur: Deac, Cornelius, 91700 Sainte Genevieve des Bois (FR)
(74) Mandataire: de Lambilly Delorme, Marie Pierre

(56) Documents cités:
- WO-A-98/31118
- STEVENS, W. R.: "TCP/IP ILLUSTRATED, Vol. 1. THE PROTOCOLS." 1994 , ADDISON WESLEY , US, READING, MA XP002100788 * page 215 - page 217 *
- DATABASE WPI Section EI, Week 9820 Derwent Publications Ltd., London, GB; Class W01, AN 98-223612 XP002100789 & JP 10 065722 A (NEC CORP), 6 mars 1998 (1998-03-06)

## Description

L'invention concerne un procédé d'attribution d'adresses informatiques entre unités d'un système de conduite d'installation industrielle reliées entre elles par une architecture locale de communication en temps partagé d'informations numériques.

Comme il est connu, la gestion d'un système de conduite d'installation industrielle implique la présence d'une architecture de communication pour que les transmissions d'informations entre les diverses unités d'exploitation programmables qui sont susceptibles d'intervenir dans la conduite soient assurées d'une manière bien adaptée aux différents besoins rencontrés.

Il est classique dans de tels systèmes d'assurer une exploitation partagée dans le temps, des liaisons de transmission utilisées entre les unités d'exploitation programmables, et de permettre aux informations dont la transmission n'est soumise qu'à des contraintes relativement souples en matière d'urgence d'exploiter les laps de temps plus ou moins régulièrement laissés disponibles par les informations soumises à des contraintes plus sévères.

Il a par ailleurs été développé des techniques de communication dans le cadre de développements liés à l'informatique, en particulier à celui des réseaux de communication de type Internet ou Intranet. Ces techniques facilitent l'exploitation d'informations enregistrées en les mettant à disposition d'un grand nombre d'intervenants, pratiquement quelle que soit la localisation de ces intervenants par rapport aux sites où les informations sont enregistrées et ceci sous des formes universellement standardisées.

L'invention se propose donc de transposer certaines de ces techniques de manière à apporter une solution simple et pratique à un problème existant dans les systèmes de conduite d'installation industrielle où des unités programmables d'exploitation, classiquement organisées chacune autour d'un ordinateur dûment programmé et d'un ensemble de mémoire, sont reliées entre elles par une architecture locale de communication.

Comme il est connu en ce domaine, chaque unité dispose d'une adresse matérielle d'unité, physiquement définie et classiquement dite câblée, qui permet d'identifier une unité parmi les autres dans le système et qui est classiquement imposée par l'installateur ou par l'exploitant à la mise en service.

Il est aussi nécessaire que les unités susceptibles de communiquer entre elles par des techniques de transmission d'informations de type informatique disposent d'adresses informatiques individuelles leur permettant de se faire reconnaître lorsqu'elles envoient des informations et d'être jointes lorsque des informations leur sont envoyées

Ainsi dans le cas où les échanges d'informations sont réalisés en utilisant le protocole Internet IP, il est nécessaire que chacune des unités dispose d'une adresse IP individuelle. L'attribution de ces adresses dans le cadre d'un réseau local peut s'effectuer de manière manuelle, toutefois une telle solution n'est pas réellement satisfaisante, en particulier lorsque le nombre d'unités reliées est élevé. Ceci est souvent le cas avec des réseaux locaux prévus industriels ou de plus il est parfois nécessaire de réaliser des modifications au cours du temps.

L'attribution d'adresses aux unités d'un réseau local peut également s'effectuer par l'intermédiaire d'un serveur d'adresses IP, tel BOOT P, prévu au niveau du réseau Internet (voir par exemple le document "TCP/IP ILLUSTRATED, vol 1, THE PROTOCOLS", 1994, ADDISON, WESLEY, US, READING, MA par STEVENS, W.R. qui donne un aperçu général du protocole Bootstrap BOOTP). Toutefois cette solution ne convient pas bien lorsque l'architecture de communication impliquée ne permet pas le transfert d'un nombre d'octets suffisant sans segmentation, comme cela se produit avec certaines architectures de communication de systèmes industriels.

L'invention propose donc un procédé d'attribution d'adresses informatiques entre unités d'un système de conduite d'installation industrielle reliées entre elles par une architecture locale de communication en temps partagé d'informations transmises sous forme numérique, pour des unités qui disposent d'origine d'une adresse matérielle numériquement traduite et qui sont aptes à communiquer entre elles en exploitant les protocoles IP, TCP (Transmission Control Protocol), UDP (User Datagram Protocol) après avoir obtenues chacune une adresse informatique IP comportant un en-tête composé de données relatives à l'adresse réseau de l'architecture locale de communication suivies par des données d'adresse individuelle de l'unité émettrice.

Selon une caractéristique de l'invention, le procédé d'attribution prévoit successivement:
- une diffusion au niveau de l'architecture de communication locale d'une trame de requête d'adresse par une unité demanderesse désireuse d'obtenir sa propre adresse informatique, ladite trame comportant notamment une adresse de port UDP destinataire relative à une des unités faisant fonction d'attributrice d'adresse dans le cadre de l'architecture locale, une adresse de port UDP propre à l'unité demanderesse, et un groupe de données caractéristique d'une demande d'adresse;
- une prise en compte de la requête par une application de l'unité d'attribution à reconnaissance de l'adresse de port UDP qui lui est propre;
- une diffusion au niveau de l'architecture de communication locale d'une trame d'attribution, de même structure que la trame de requête, par l'unité d'attribution d'adresses, ladite trame d'attribution comportant notamment l'adresse de port UDP de l'unité demanderesse, au niveau destinataire et des données correspondant à sa propre adresse IP d'unité d'attribution;
- une prise en compte des données correspondant à l'adresse IP de l'unité d'attribution par l'unité demanderesse à reconnaissance de l'adresse de port UDP qui lui est propre, au niveau destinataire de la trame d'attribution diffusée, et une détermination par l'unité demanderesse de sa propre adresse IP, à des fins de stockage et d'exploitation, à partir des données d'adresse IP d'unité d'attribution qu'elle a reçues, par substitution des données d'adresse matérielle qui lui sont propres à celles de l'unité d'attribution en queue de l'adresse IP communiquée pour cette unité d'attribution.

Selon l'invention le procédé prévoit que les trames d'attribution et de requête incluent identiquement un en-tête comportant successivement une adresse physique et une adresse IP de destinataire qui sont caractéristiques d'une diffusion, une adresse IP de source relative à une source considérée comme inconnue dans le cas d'une trame de requête et relative à l'unité d'attribution d'adresse dans le cas d'une trame d'attribution, une adresse de port UDP destinataire relative à l'unité d'attribution dans le cas d'une trame de requête et à l'unité demanderesse d'adresse dans le cas d'une trame d'attribution, une adresse de port UDP source relative à l'unité demanderesse dans le cas d'une trame de requête et relative à l'unité d'attribution d'adresse dans le cas d'une trame d'attribution, ainsi qu'un octet de données caractéristiques d'une demande d'adresse dans le cas d'une trame de requête et correspondant à l'adresse matérielle de l'unité d'attribution dans le cas d'une trame d'attribution.

L'invention, ses caractéristiques et ses avantages sont précisés dans la description qui suit en liaison avec les figures évoquées ci-dessous.
La figure 1 présente un schéma de principe d'une architecture de communication pour système de conduite d'une installation industrielle.
La figure 2 présente un format d'adresse IP exploité par l'invention.
La figure 3 présente un schéma relatif à une pile de protocoles à quatre couches mise en oeuvre par l'invention.

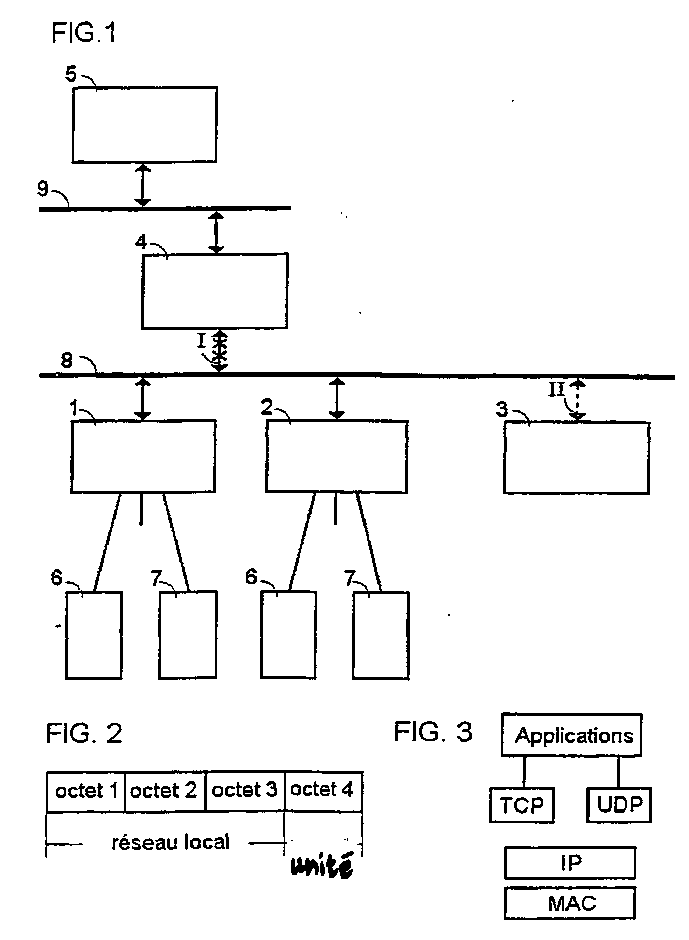

L'architecture de communication pour système de conduite d'une installation industrielle qui est illustrée sur la figure 1 est supposée destinée à assurer des échanges d'informations numérisées entre des unités d'exploitation programmables référencées 1 à 5 du système qui comporte une pluralité de dispositifs de contrôle/commande. Ces derniers sont par exemple des capteurs 6 ou des actionneurs 7 et ils sont contrôlés par certaines des unités d'exploitation couramment dénommées unités ou dispositifs de terrain, telles ici 1 et 2.

Ces unités de terrain 1 et 2 sont supposées fournir et/ou recevoir des informations relatives aux opérations, notamment de commande et de mesure, réalisées par les dispositifs qu'elles supervisent. Elles échangent des informations mises sous forme numérique, en fonction des besoins, notamment avec d'autres unités du système de conduite de l'installation, telle l'unité 3 dans une première variante de réalisation où seule la liaison II est établie, telles les unités 4 et 5 dans une seconde variante où seule la liaison I est établie et telles les unités 3, 4 et 5 dans une troisième variante où les deux liaisons I et II sont établies.

Les diverses unités d'exploitation 1 à 5 sont organisées chacune autour d'au moins un processeur et d'un ensemble de mémoires mortes et/ou vives et elles sont raccordées par une interface de communication à l'architecture de communication du système de conduite ou plus précisément à au moins une liaison de cette architecture.

Dans l'exemple présenté, les unités de terrain 1, 2 et l'unité d'exploitation 3, qui est par exemple une station locale d'opérateur, font partie d'un réseau local organisé autour d'un bus 8 exploité en partage de temps. Les informations sont transmises sous forme numérique et par exemple par paquets au cours de trames temporelles structurées d'une manière déterminée, comme connu en ce domaine. Une unité d'exploitation 4 est supposée jouer un rôle de routeur entre les autres unités reliées au bus 8 et des unités de niveau supérieur. Ces dernières sont ici supposées reliées à titre d'exemple à un réseau Ethernet 9 et elles sont symbolisées par l'unité 5. Cette dernière est par exemple un calculateur de procédé ou une console d'opérateur.

Selon l'invention, il est prévu d'appliquer les techniques de communication et notamment d'adressage développées dans le cadre du réseau Internet à au moins une partie des informations échangées entre les unités d'exploitation dans le cadre d'un réseau local tel qu'évoqué ci-dessus. Comme il est connu ceci implique que chaque unité reliée au réseau dispose d'une adresse informatique individuelle qu'elle exploite pour s'identifier lorsqu'elle envoie des informations et qui est exploitée par les autres unités pour communiquer avec elle. Cette adresse informatique tient classiquement compte d'une adresse matérielle d'unité, physiquement définie et classiquement dite câblée, qui permet d'identifier une unité parmi les autres et qui est donnée à la mise en service de l'installation. Cette adresse matérielle est par exemple fixée au moyen d'un système de cavaliers; de commutateurs ou de roues de codage matériellement implanté au niveau de chaque unité.

Dans l'exemple proposé ici, l'adresse informatique de chacune des unités adressables d'un réseau local est donnée en suivant les règles en vigueur dans le cadre du protocole Internet IP, version 4. Chaque adresse informatique d'unité se présente sous la forme schématisée sur la figure 2, où sont représentés, à titre d'exemple, 3 octets d'adresse de réseau suivis par un octet d'adresse d'unité. Cette adresse d'unité correspond ici à l'adresse matérielle individuelle initialement attribuée à chaque unité à la mise en service. Les possibilités d'adresse que permet ce dernier octet sont en général suffisantes pour identifier les unités, notamment de terrain, d'un réseau local ou d'un segment de réseau local d'un système de conduite d'une installation industrielle.

Toutefois si chaque unité d'un réseau local est dotée d'une adresse matérielle lorsqu'elle est mise en service, elle ne dispose pas nécessairement pour cela d'une adresse informatique IP attribuée. Selon l'invention, il est donc prévu que toute unité requiert par diffusion sur le réseau local une demande d'adresse IP, si elle n'a pas connaissance de cette adresse. Il est donc prévu une pile comportant des couches IP, TCP et UDP comme schématisé en figure 3 entre application et couche MAC (Media Access Control) d'accès au réseau, au niveau de chacune des unités reliées au réseau local.

La diffusion de requête d'adresse à partir d'une unité s'effectue par envoi d'un datagramme en exploitant le protocole de transport de datagrammes d'usager UDP et donc en mode non connecté. Cette requête est ici supposée convoyée dans le cadre d'une trame de transmission, en vigueur dans le réseau local, dont la structure est donnée ci-dessous.
<en-tête physique><en-tête IP><en-tête UDP><données>

Cette trame comporte donc un en-tête physique ayant un nombre donné d'octets, par exemple 6 octets dans le cas d'un réseau F8000 de la demanderesse ou encore 12 octets dans le cas d'un réseau ETHERNET. Cet en-tête est suivi par un en-tête IP de 20 octets qui est lui-même suivi d'un en-tête UDP de 8 octets, à la suite desquels sont positionnés des octets de données.

Comme connu un en-tête IP comporte 4 octets d'adresse de source et 4 octets d'adresse de destination. Un en-tête UDP comporte aussi 2 octets d'adresse de port de source et 2 octets d'adresse de port de destination.

La requête émanant d'une unité d'exploitation telle que par exemple l'unité de terrain 1 est diffusée sous la forme d'une trame de requête dont la structure se définit de la manière indiquée ci-dessous:
<adresse physique de diffusion><adresse IP de destination><adresse IP de provenance><adresse de port destinataire><adresse de port source><données>

Dans cette trame, l'adresse physique d'en-tête est caractéristique d'une diffusion de même que l'adresse de destination IP, cette dernière correspondant par exemple à un code 255.255 255.255 en notation décimale. L'adresse de provenance correspond à un code caractéristique de source inconnue, par exemple 0.0.0.0. L'adresse de port source fournie est celle du port UDP choisi pour l'unité qui demande une adresse, par exemple 6003 pour l'unité 3. L'adresse de port destinataire est une adresse de port UDP, par exemple 6255, qui a été prédéterminée et attribuée d'origine à l'unité d'exploitation chargée de l'attribution des adresses au niveau local. Cette unité est supposée être l'unité 3 dans la première variante envisagée plus haut et l'unité 4, dans la seconde variante. Les données de commande figurant en queue de la trame indiquée ci-dessus sont ici supposées être caractéristiques d'une demande d'adresse.

Cette trame de requête est diffusée par le réseau local et donc ici via le bus 8. Elle traverse la couche physique, la couche IP et atteint la couche UDP où l'adresse de port UDP est reconnue comme attribuée à l'unité d'attribution d'adresse.

Une application implantée dans cette unité d'attribution permet de traiter la requête convoyée par la trame de requête définie ci-dessus et d'attribuer une adresse IP disponible au niveau local à l'unité demanderesse. Suite à la réception de la trame de requête, l'unité d'attribution d'adresse 3 ou 4 diffuse à son tour une trame d'attribution dont la structure est identique à celle définie plus haut. Cette trame contient successivement une adresse physique et une adresse IP de destination caractéristiques d'une diffusion, comme précédemment, une adresse IP de provenance et une adresse UDP de port source propres à l'unité d'attribution d'adresse, une adresse UDP relative au port destinataire prévu pour l'unité demanderesse qui a diffusé la trame de requête et des données définissant l'adresse IP que possède l'unité d'attribution elle-même.

Ces données définissent par exemple une adresse telle que 192.9.240.17, dans laquelle le dernier octet qui correspond ici au nombre décimal 17 correspond aussi à l'adresse matérielle de l'unité d'attribution.

La couche IP présente uniquement les données qui correspondent ici à l'adresse IP de l'unité d'attribution, à la couche UDP. La trame d'attribution est diffusée par l'unité d'attribution vers toutes les unités appartenant au réseau local et notamment aux unités de terrain, telles que 1, 2, via le bus 8 dans l'exemple proposé en figure 1.

L'adresse de port destinataire contenue dans une trame d'attribution permet à l'unité exploitant ce port de savoir que les données contenues dans cette trame lui sont destinées et correspondent à celles qui vont lui permettre de déterminer quelle est sa propre adresse IP. En effet l'adresse IP reçue correspond à celle de l'unité d'attribution d'adresse qui ne se différencie de celle de l'unité demanderesse que par le dernier octet dont on a vu qu'il était établi de manière à correspondre à une adresse matérielle d'unité.

Dans l'exemple choisi où l'unité demanderesse a une adresse matérielle correspondant au nombre 3 en notation décimale et où l'adresse IP qu'elle reçoit dans la trame d'attribution est 192.9.240.17 en notation décimale, il est prévu des moyens, au niveau de l'unité de commande de cette unité demanderesse, qui permettent de modifier la valeur du dernier octet d'adresse IP de manière que celui-ci corresponde au nombre décimal 3 d'adresse matérielle de l'unité demanderesse et qu'il se substitue à l'octet correspondant au nombre 17 de l'utrité d'attribution. Dans l'exemple choisi, l'unité demanderesse d'adresse matérielle 3 détermine ainsi qu'elle dispose de l'adresse IP 192.9.240.3 dans le cadre du réseau local auquel elle est reliée. Elle est alors apte à prendre toute mesure utile pour conserver et exploiter cette adresse IP.

La détermination des adresses IP au niveau d'un ensemble d'unités reliées à un même réseau local est donc particulièrement simple, il peut donc être rapide et il n'implique qu'un trafic très limité de données.

Cet adressage IP des unités d'un réseau local peut notamment être employé pour des transmissions de données par pages HTML. Dans ce cas, au moins certaines des unités et notamment les unités de terrain comportent individuellement chacune un serveur leur permettant de remplir des structures de page HTML prédéterminées stockées au niveau de ces unités avec des valeurs de variables ou de paramètres collectées et/ou exploitées localement, de manière à les rendre accessibles à des intervenants très divers.

Un tel accès peut s'effectuer au niveau d'unités reliées au réseau local qui interviennent en tant que clientes auprès des serveurs ou au niveau d'ordinateurs équipés matériellement et logiciellement pour pouvoir se relier au réseau local soit directement, soit par l'intermédiaire d'un autre réseau de communication et en particulier du réseau Internet.

## Revendications

1. Procédé d'attribution d'adresses informatiques entre unités (1 à 5) d'un système de conduite d'installation industrielle reliées entre elles par une architecture locale de communication en temps partagé (8, 9) où des informations sont transmises sous forme numérique, pour des unités qui disposent d'origine d'une adresse matérielle numériquement traduite et qui sont aptes à communiquer entre elles en exploitant les protocoles IP, TCP, UDP après avoir obtenues chacune une adresse informatique IP comportant un en-tête composé de données relatives à l'adresse réseau de l'architecture locale de communication suivies des données d'adresse individuelle de l'unité émettrice, **caractérisé en ce qu'**il prévoit successivement:
- une diffusion au niveau de l'architecture de communication locale d'une trame de requête d'adresse par une unité demanderesse désireuse d'obtenir sa propre adresse informatique, ladite trame incluant notamment une adresse de port UDP destinataire qui est relative à une des unités (3 ou 4) faisant fonction d'attributrice d'adresse dans le cadre de l'architecture locale, une adresse de port UDP source propre à l'unité demanderesse, et des données caractéristiques d'une demande d'adresse;
- une prise en compte de la requête par une application dans l'unité d'attribution à reconnaissance de l'adresse de port UDP qui lui est propre;
- une diffusion au niveau de l'architecture de communication locale d'une trame d'attribution, de même structure que la trame de requête, par l'unité d'attribution d'adresses, ladite trame d'attribution comportant notamment l'adresse de port UDP de l'unité demanderesse, à un niveau destinataire, et des données correspondant à sa propre adresse IP d'unité d'attribution;
- une prise en compte des données correspondant à l'adresse IP de l'unité d'attribution par l'unité demanderesse à reconnaissance de l'adresse de port UDP qui lui est propre, à un niveau destinataire de la trame d'attribution diffusée, et une détermination par l'unité demanderesse de sa propre adresse IP, à des fins de stockage et d'exploitation, à partir des données d'adresse IP d'unité d'attribution qu'elle a reçues, par substitution des données d'adresse matérielle qui lui sont propres à celles de l'unité d'attribution en queue de l'adresse IP communiquée pour cette unité d'attribution.

2. Procédé selon la revendication 1, dans lequel les trames d'attribution et de requête incluent identiquement un en-tête comportant successivement une adresse physique et une adresse IP de destinataire qui sont caractéristiques d'une diffusion, une adresse IP de source relative à une source considérée comme inconnue dans le cas d'une trame de requête et relative à l'unité d'attribution d'adresse dans le cas d'une trame d'attribution, une adresse de port UDP destinataire relative à l'unité d'attribution dans le cas d'une trame de requête et à l'unité demanderesse d'adresse dans le cas d'une trame d'attribution, une adresse de port UDP source relative à l'unité demanderesse dans le cas d'une trame de requête et relative à l'unité d'attribution d'adresse dans le cas d'une trame d'attribution, ainsi qu'un octet de données caractéristiques d'une demande d'adresse dans le cas d'une trame de requête et correspondant à l'adresse matérielle de l'unité d'attribution dans le cas d'une trame d'attribution.

## Patentansprüche

1. Verfahren zum Zuteilen von Informatikadressen zwischen Einheiten (1-5) eines Steuerungssystems einer industriellen Anlage, die untereinander durch eine lokale Zeitmultiplex-Kommunikationsarchitektur (8, 9) verbunden sind, wo Informationen in digitaler Form übertragen werden, für Einheiten, die ursprünglich über eine digital übersetzte materielle Adresse verfügen und die in der Lage sind, untereinander unter Nutzung der Protokolle IP, TCP, UDP zu kommunizieren, nachdem sie jeweils eine IP-Informatikadresse erhalten haben, die einen Header umfasst, der aus auf die Netzwerkadresse der lokalen Kommunikationsarchitektur bezogenen Daten, gefolgt von individuellen Adressdaten der sendenden Einheit gebildet ist, **dadurch gekennzeichnet, dass** es nacheinander vorsieht:
- eine Verbreitung eines Adressanforderungsrahmens auf der Ebene der lokalen Kommunikationsarchitektur durch eine anfordernde Einheit, die ihre eigene Informatikadresse erhalten will, wobei der Rahmen insbesondere eine Ziel-UDP-Portadresse, die sich auf eine der Einheiten (3 oder 4) bezieht, die als Adressenzuteiler im Rahmen der lokalen Architektur dient, eine Quell-UDP-Portadresse, die der anfordernden Einheit eigen ist, und charakteristische Daten einer Adressenanforderung enthält;
- eine Berücksichtigung der Anforderung durch eine Anwendung in der Adressenzuteilungseinheit bei Erkennung der ihr eigenen UDP-Portadresse;
- eine Verbreitung eines Zuteilungsrahmens von gleicher Struktur wie der Anforderungsrahmen auf der Ebene der lokalen Kommunikationsarchitektur durch die Adressenzuteilungseinheit, wobei der Zuteilungsrahmen insbesondere die UDP-Portadresse der anfordernden Einheit auf einer Zielebene und der eigenen IP-Adresse der Zuteilungseinheit entsprechende Daten unfasst;
- eine Berücksichtigung der der IP-Adresse der Zuteilungseinheit entsprechenden Daten durch die anfordernde Einheit bei Erkennung der ihr eigenen UDP-Portadresse auf einer Empfängerebene des verbreiteten Zuteilungsrahmens und eine Bestimmung der eigenen IP-Adresse der anfordernden Einheit durch diese zu Zwecken der Speicherung und Nutzung ausgehend von den IP-Adressdaten der Zuteilungseinheit, die sie empfangen hat, durch Ersetzen von ihr eigenen materiellen Adressdaten anstelle derjenigen der Zuteilungseinheit am Ende der für diese Zuteilungseinheit mitgeteilten IP-Adresse.

2. Verfahren nach Anspruch 1, bei dem die Zuteilungs- und Anforderungsrahmen in gleicher Weise einen Header enthalten, der nacheinander eine physikalische Adresse und eine Ziel-IP-Adresse, die für eine Verbreitung charakteristisch sind, eine Quell-IP-Adresse, die im Fall eines Anforderungsrahmens auf eine als unbekannt angenommene Quelle bezogen ist und im Falle eines Zuteilungsrahmens auf die Adressenzuteilungseinheit bezogen ist, eine Ziel-UDP-Portadresse, die im Fall eines Anforderungsrahmens auf die Zuteilungseinheit bezogen ist und im Fall eines Zuteilungsrahmens auf die adressenanfordernde Einheit bezogen ist, eine Quell-UDP-Portadresse, die im Fall eines Anforderungsrahmens auf die anfordernde Einheit und im Fall eines Zuteilungsrahmens auf die Adressen zuteilende Einheit bezogen ist, sowie ein Datenbyte, das im Fall eines Anforderungsrahmens für eine Adressenanforderung charakteristisch ist und im Fall eines Zuteilungsrahmens der materiellen Adresse der Zuteilungseinheit entspricht, enthält.

## Claims

1. A method of allocating computer addresses to units (1 to 5) of a system for running an industrial installation, the units being interconnected by a local time-shared communications architecture (8, 9) in which information is transmitted in digital form, the method being applicable to units which are originally provided with a hardware address in digital form and which are suitable for communicating between one another by using the IP, TCP, and UDP protocols after each of them has obtained an IP computer address including a header made up of data relating to the network address of the local communications architecture followed by address data individual to the sending unit, the method being **characterized in that** it provides the following steps in succession:
· an address request frame is broadcast over the local communications architecture by a requesting unit seeking to obtain its own computer address, said frame including in particular a destination UDP port address relating to one of the units (3 or 4) acting as an address allocator in the local architecture, a source UDP port address specific to the requesting unit, and data characteristic of an address request;
· the request is taken into account by an application in the allocation unit on said unit recognizing the UDP port address that belongs thereto;
· an allocation frame having the same structure as the request frame is broadcast over the local communications architecture by the address allocation unit, said allocation frame including, in particular, the UDP port address of the requesting unit, at a destination level, and data corresponding to its own allocation unit IP address;
· the data corresponding to the IP address of the allocation unit is taken into account by the requesting unit on recognizing its own UDP port address in the destination level of the broadcast allocation frame, and the requesting unit determines its own IP address for storage and operating purposes from the IP address data of the allocation unit that it has received, by substituting hardware address data specific to itself for the hardware address data of the allocation unit at the end of the IP address as communicated for said allocation unit.

2. A method according to claim 1, in which the allocation and request frames include in identical manner a header comprising in succession a physical address and a destination IP address which are characteristic of a broadcast, a source IP address relating to a source considered as being unknown in the context of a request frame and relating to the address allocation unit in the context of an allocation frame, a destination UDP port address relating to the allocation unit in the context of a request frame and to the address requesting unit in the context of an allocation frame, a source UDP port address relating to the requesting unit in the context of a request frame and relating to the address allocation unit in the context of an allocation frame, and a data byte characteristic of an address request in the context of a request frame and corresponding to the hardware address of the allocation unit in the context of an allocation frame.
